# EUROPEAN PATENT APPLICATION

(11) **EP 1 770 076 A2**
(43) Date of publication of application: **04.04.2007**
(21) Application number: 06020295.9
(22) Date of filing: 27.09.2006
(51) Int. Cl.: C04B 38/06, F16C 11/00

(54) **Ceramic component, ceramic component production method, ceramic sliding member and sliding mechanism**

(30) Priority: 29.09.2005 JP 2005283852; 29.09.2005 JP 2005283852
(71) Applicant: NGK Spark Plug Co., Ltd., Nagoya-shi, Aichi 467-8525 (JP)
(72) Inventor: Nishisato, Hiroaki, Mizuho-ku, Nagoya-shi, Aichi 467-8525 (JP); Kojima, Hirokazu, Mizuho-ku, Nagoya-shi, Aichi 467-8525 (JP); Itoh, Michinobu, Mizuho-ku, Nagoya-shi, Aichi 467-8525 (JP)
(74) Representative: Grünecker, Kinkeldey, Stockmair & Schwanhäusser Anwaltssozietät

(57) **Abstract**

A ceramic component has a surface formed with a plurality of open pores. The pores in the surface of the ceramic component have an average opening diameter of 50 to 500 µm, and the surface of the ceramic component has a sliding area rate of 20 to 85%.

## Description

### BACKGROUND OF THE INVENTION

The present invention relates to a ceramic component, a ceramic component production method, a ceramic sliding member and a sliding mechanism.

There are various types of sliding mechanisms such as a mixing valve unit, a seal ring unit and a bearing unit, each of which has two or more sliding members slidable relative to each other to perform two opposite functions: a valve function and a seal function. In recent years, the long-life operations of the sliding mechanisms, i.e., the high durability of the sliding members has also been demanded. Ceramic sliding members are expected to be useful as such highly durable sliding members.

Japanese Laid-Open Patent Publication No. 8-143381 discloses a porous ceramic sliding member formed with an average pore diameter of 5 to 300 µm and a higher silicon content in at least part of pore surfaces or pore surface portions than in other portions so as to secure high material strength and maintain sliding and sealing characteristics during use.

Japanese Patent No. 3481774 discloses a porous ceramic sliding member having a surface formed with an average pore diameter of 5 to 30 µm, an effective sliding area rate of 40 to 90% by a standard deviation of 4 to 10% and a porosity of 4% or lower so as to secure high durability and maintain sliding and sealing characteristics during use. In Japanese Patent No. 3481774, the control of the average pore diameter of the ceramic material surface to within the range of 5 to 30 µm is regarded particularly important to achieve ease of production and to prevent early wearing resulting from mechanical characteristics deterioration.

Japanese Laid-Open Patent Publication No. 8-128448 discloses a densified ceramic sliding member having a surface formed with a plurality of dimples to retain a lubricant in elongated and acute angle portions of the dimples so as to secure high wear resistance and maintain sliding and sealing characteristics during use.

### SUMMARY OF THE INVENTION

However, the above conventional ceramic sliding members are often susceptible to adhesion (also called a "sticking phenomenon") in which the sliding members adhere (stick) to and resist sliding against the their opposing members due to rises in sliding torques so that the sliding and sealing characteristics of the sliding members become deteriorated over a long time or over a number of uses.

It is therefore an object of the present invention to provide a ceramic component, when formed into and used as a sliding member, capable of showing both of high durability and excellent sliding and sealing characteristics over a long time or over a number of uses and to provide a production method of the ceramic component.

It is also an object of the present invention to provide a ceramic sliding member capable of showing both of high durability and excellent sliding and sealing characteristics over a long time or over a number of uses and a sliding mechanism equipped with at least one such a ceramic sliding member.

According to a first aspect of the present invention, there is provided a ceramic component having surface formed with a plurality of open pores, wherein an average opening diameter of the pores in the surface of the ceramic component is in the range of 50 to 500 µm and a sliding area rate of the surface of the ceramic component is in the range of 20 to 85%.

According to a second aspect of the present invention, there is provided a method of producing the ceramic component, comprising: preparing a mixture of a ceramic powder and a pore forming agent; molding the mixture to obtain a molded body; and sintering the molded body at a temperature higher than a burning temperature of the pore forming agent.

According to a third aspect of the present invention, there is provided a sliding member formed of the ceramic component.

According to a fourth aspect of the present invention, there is provided a sliding mechanism, comprising a pair of sliding members slidable relative to each other, wherein at least one of the sliding members is formed of the ceramic component.

The other objects and features of the invention will also become understood from the following description.

### BRIEF DESCRIPTION OF THE DRAWINGS

FIG 1 is an exploded view of a sliding mechanism according to a first embodiment of the present invention.

FIG. 2 is a perspective view of the sliding mechanism according to the first embodiment of the present invention.

FIG 3 is a sectional view of a sliding mechanism according to a second embodiment of the present invention.

FIG. 4 is a sectional view of a sliding mechanism according to a third embodiment of the present invention.

### DESCRIPTION OF THE EMBODIMENTS

The present invention will be described below in detail with reference to the drawings.

The following exemplary embodiment of the present invention provides a ceramic component suitably for use as a sliding member.

The ceramic component has a surface formed with a plurality of separate and distinct open pores. These pores (hereinafter referred to as "surface pores") dispersed over the ceramic component surface so that each of the surface pores is not in contact with and not in communication with any other adjacent ones of the surface pores. By the formation of such open pores in the ceramic component surface, the ceramic component becomes able to attain a smaller sliding surface area, retain a lubricant in the surface pores and, when there is foreign matter in the fluid and/or when the ceramic component is chipped during sliding, store such foreign matter and/or ceramic chippings in the surface pores. The occurrence of adhesion (sticking), in which the ceramic sliding member adheres (sticks) to and resists sliding against the opposing sliding member, can be thus prevented. Moreover, the ceramic component does not decrease in strength since the surface pores are separately scattered over the ceramic component surface. It is therefore possible to achieve high durability and excellent sliding and sealing characteristics over a long time or over a number of uses.

There may be a plurality of internal pores (voids) in the ceramic component. In this case, each of the internal pores exists independently in the interior of the ceramic component and is not in contact and communication with any other adjacent ones of the internal pores and any ones of the surface pores. Even when the ceramic component surface eventually wears out from sliding, some of the internal pores become exposed to the ceramic component surface and turn into new surface pores so as to serve the same functions as those of the original surface pores. It is thus possible to protect the ceramic component from adhesion (sticking) and maintain sliding and sealing characteristics, if there arise a wearing down of the ceramic component surface, without causing a decrease in strength.

The number of the surface pores can be adjusted according to an average opening diameter of the surface pores and a sliding area rate of the ceramic component surface.

In the present embodiment, the average opening diameter of the surface pores is in the range of 50 to 500 µm. When the average opening diameter of the surface pores is less than 50 µm, the sliding area rate of the ceramic component surface becomes so high (i.e. the sliding surface area of the ceramic component becomes so large) as to cause an increase in friction resistance and a deterioration in durability In addition, such small surface pores cannot retain therein the lubricant and, if there is foreign matter in the fluid and/or when the ceramic component is chipped during the sliding, are readily clogged with the foreign matter and/or ceramic chippings. This results in the occurrence of adhesion (sticking phenomenon) due to high sliding resistance, whereby the ceramic component fails to provide sufficient sliding characteristics. On the other hand, the sliding area rate of the ceramic component surface becomes too low (i.e. the sliding surface area of the ceramic component becomes too small) to provide sufficient sealing characteristics when the average opening diameter of the surface pores exceeds 500 µm. In order to achieve high durability and excellent sliding and sealing characteristics, the average opening diameter of the surface pores is preferably controlled to 55 to 300 µm, more preferably 60 to 120 µm.

The average opening diameter of the surface pores can be determined as follows. An arithmetic mean diameter of the surface pores in a predetermined surface region of 1000 µm × 700 µm on the ceramic component surface is calculated by observing the surface region with a magnification of 50 times using a metallurgical microscope (available under the name of "BX60M" from OLYMPUS CORPORATION), analyzing the observed image of the surface region by image analysis/measurement software (available under the name of "Win Proof" from MITANI CORPORATION) to measure the opening areas of the surface pores in the observed surface image, converting the measured pore opening areas into equivalent circular diameters and then obtaining an arithmetic mean value of these circular diameters. The above procedure is performed on randomly selected ten surface regions so that the average surface pore opening diameter is given as an average of ten arithmetic mean diameter values in the present embodiment.

It should be noted that, even though the ceramic component is highly densified, fine discrete pores are inevitably generated in the ceramic component during sintering. These inevitable fine pores are dispersed over the ceramic component surface and throughout the interior of the ceramic component and generally have a diameter of smaller than 40 µm. For this reason, the surface pores mean the pores having a diameter of 40 µm or greater irrespective of whether they are inevitably generated or not in the present embodiment.

Further, the sliding area rate of the ceramic component surface is in the range of 20 to 85% in the present embodiment. The sliding area rate of the ceramic component surface is herein defined as a ratio of the surface area of a non-porous sliding surface portion (where no surface pores and no inevitable fine pores exist) in a predetermined region of the ceramic component surface to the total surface area of the predetermined region of the ceramic component surface as measured on the assumption that there are no pores in the ceramic component surface. Namely, the sliding area rate is given by [(S_{S} - S_{R}) / S_{S}] × 100 (%) where S_{S} is the total surface area of the predetermined region of the ceramic component surface as measured on the hypothesis that there are no pores in the ceramic component surface; and S_{R} is the sum of the opening areas of the surface pores and inevitable fine pores within the predetermined region of the ceramic component surface (S_{R} is not the sum of the surface areas of the pores). When the sliding area rate is less than 20%, the sliding surface area of the ceramic component becomes too small to provide sufficient sealing characteristics. When the sliding area rate exceeds 859a, there arises an increase in sliding resistance to cause durability deterioration. The amount of lubricant retained in the surface pores decreases with increase in the sliding surface area of the ceramic component. If there is foreign matter in the fluid and/or when the ceramic component is chipped during the sliding, the surface pores are readily clogged with the foreign matter and/or ceramic chippings over a long time or over a number of uses. This results in the occurrence of adhesion (sticking) due to high sliding resistance so that the ceramic component fails to provide sufficient sliding characteristics. In order to achieve high durability and excellent sliding and sealing characteristics, the sliding area rate of the ceramic component surface is preferably controlled to 30 to 80%, more preferably 40 to 75%.

The sliding surface rate can be determined as follows. A sliding area rate of a predetermined surface region of 1000 µm × 700 µm on the ceramic component surface is calculated by observing the surface region with a magnification of 50 times using a metallurgical microscope (available under the name of "BX60M" from OLYMPUS CORPORATION), analyzing the observed image of the surface region by image analysis/measurement software (available under the name of "Win Proof" from MITANI CORPORATION) to measure the opening areas of the surface pores and inevitable fine pores in the observed surface image, calculating a sum (S_{R}) of the measured pore opening areas and a difference between the sum (S_{R}) of the pore opening areas and the total surface area (S_{S} = 700,000 µm²) of the observation surface region and then dividing the area difference (S_{S} - S_{R}) by the total surface area (S_{S}) of the observation surface region. In the present embodiment, the above procedure is performed on randomly selected ten surface regions so that the sliding area rate is given as an average of ten sliding area rate values.

In order to secure excellent sealing characteristics, it is desirable that the surface portion of the ceramic component surface in which no surface pores exist be smoothened. However, there arises a great possibility of the occurrence of adhesion (sticking) when the smoothness of such a surface portion of the ceramic component surface is too high. For this reason, the smoothness of the ceramic component surface portion with no surface pores is preferably limited to a given degree. In order to achieve excellent sealing characteristic and to prevent the occurrence of adhesion (sticking) properly, it is preferable to e.g. control the surface roughness Ra of the ceramic component surface portion with no surface pores to 0.05 to 0.30 µm, more preferably 0.10 to 0.25 µm, according to JIS B0633-2001.

There are no particular restrictions on the opening diameter and opening area rate of the inevitable fine pores in the ceramic component surface. For example, the opening diameter and opening area rate of the inevitable fine pores in the ceramic component surface are in the range of 1 µm to smaller than 40 µm and in the range of 15 to 60%, respectively. The opening area rate of the inevitable fine surface pores is herein defined as a ratio of the sum (Sᵣ) of the opening areas of the inevitable fine surface pores to the total surface area (S_{S}) of the ceramic component and, namely is given by (Sᵣ / S_{S}) × 100 (%). It is desirable to control the opening diameter of the inevitable fine surface pores to 5 to 30 µm and to control the opening area rate of the inevitable fine surface pores to 35 to 50% in order to achieve high durability and excellent sliding and sealing characteristics.

The ceramic component is generally produced by preparing a ceramic powder, molding the ceramic powder to obtain a green ceramic body and sintering the ceramic body. In order for the ceramic component to attain high durability and excellent sliding and sealing characteristics over a long time or over a number of uses, the ceramic powder is preferably an alumina powder, a silicon nitride powder or a mixture of alumina and silicon nitride powders. In other words, the ceramic component is preferably in the form of sintered alumina, alumina ceramic, sintered silicon nitride and sialons such as α-sialon and β-sialon.

Various additive or additives such as a pore forming agent, a sintering aid and a binder may be mixed into the ceramic powder as required.

In the case of using the pore forming agent, for example, the ceramic component is produced by mixing the pore forming agent into the ceramic powder, molding the resultant power mixture, and then, sintering the molded body at a temperature higher than the burning temperature of the pore forming agent such that the pore forming agent gets burned away during the sintering to form the surface and internal pores in the ceramic component.

The pore forming agent is not particularly restricted as long as it is capable of being burned away during the sintering. Specific examples of the pore forming agent are: graphite and carbon (such as coke, charcoal, carbon black or activated carbon); and carbon precursor (any carbon substance such as wood flour or synthetic resin capable of being readily carbonized). These pore forming agent compounds can be used alone or in combination of two or more thereof. The pore forming agent is preferably in the form of spherical particles. Further, the particle size of the pore forming agent is preferably made uniform. The opening diameter of the surface pores, the sliding area rate of the ceramic component surface and the number and diameter of the internal pores can be controlled by adjusting the particle size and content of the pore forming agent. In order to control the opening diameter of the surface pores to the above desired level, it is preferable to set the particle size of the pore forming agent at a value slightly larger than the desired opening diameter of the surface pores in view of the shrinkage of the ceramic component during the sintering. For example, the average particle size of the pore forming agent can be set at from 55 to 550 µm to provide the ceramic component with an average surface pore opening diameter of 50 to 500 µm, and then, can be set at from 90 to 150 µm to provide the ceramic component with an average surface pore opening diameter of 60 to 120 µm. It is also preferable to control the content of the pore forming agent to 0.5 to 10 mass%, preferably 1.0 to 5 mass%, based on the total mass of the ceramic powder mixture in order to control the sliding area rate of the ceramic component surface to 20 to 85% although the content of the pore forming agent depends on the average particle size of the pore forming agent.

The sintering aid is not also particularly restricted. Specific examples of the sintering aid are: magnesium oxide, silicon dioxide and calcium oxide for the alumina powder; and oxides and nitrides of aluminum and elements of groups 2 and 3 of the periodic table for the silicon nitride powder. The content of the sintering aid can be adjusted appropriately.

The binder is suitably used in particular when the molding process is performed by die press molding. The binder is not particularly restricted. Any known binder can be used. The content of the binder can also be adjusted appropriately.

The additive or additives (the pore forming agent, the sintering aid and/or the binder etc.) are uniformly mixed into the ceramic powder by a dry or wet process using a mixer (agitator, blender). The conditions of the mixing process (e.g. mixing temperature, time and speed) can be set appropriately in such a manner that the ceramic powder can be uniformly mixed with the additive or additives.

The ceramic powder or ceramic powder mixture can be molded by any known molding process such as die press molding, injection molding or slip casting. In the case of die press molding, the molding pressure can be set depending on the kind of ceramic powder used. The molding pressure is preferably set at 750 to 1500 kg/cm², more preferably 1000 to 1250 kg/cm², in the case of using the alumina powder; and is preferably set at 900 to 1800 kg/cm², more preferably 1100 to 1500 kg/cm², in the case of using the silicon nitride powder. In the case of injection molding, the ceramic powder or ceramic powder mixture is injected into a molding die using a given injection molding machine.

The molded ceramic body can be of any shape e.g. a disc shape, a polygonal plate shape, a sheet shape, a ring shape or a cylindrical shape. The shape of the ceramic body is determined in such a manner as to readily comply with the shape required of the sliding member.

In the case of using the binder, it is desirable to remove the binder from the ceramic body before the sintering process. The binder can be removed with vaporization, decomposition or burning by heating the ceramic body at a temperature lower than the burning temperature of the pore forming agent. The conditions of the heating process (e.g. heating temperature, time and speed) are set appropriately such that the ceramic body does not become damaged during the heating.

The molded ceramic body is sintered at a temperature higher than the burning temperature of the pore forming agent as mentioned above. The sintering process can be performed in any appropriate atmosphere such as in the air, in a vacuum, a nitrogen atmosphere, an oxidizing atmosphere or a non-oxidizing atmosphere using a known electric or gas furnace. The conditions of the sintering process (e.g. sintering atmosphere and temperature) are determined depending on the kind of ceramic powder used, such that the ceramic body can be sintered sufficiently without causing an excessive decrease in volume rate due to the sintering shrinkage. To prepare the ceramic body using the alumina powder, for example, it is desirable to sinter the ceramic body in an oxidizing atmosphere at a temperature of 1400 to 1700°C, more desirably 1550 to 165U°C_ To prepare the ceramic body using the silicon nitride powder, it is desirable to sinter the ceramic body in a non-oxidizing atmosphere at a temperature of 1500 to 1750°C, more desirably 1600 to 1700°C.
The time of temperature rise from an ambient temperature to the sintering temperature is preferably set at 6 to 20 hours. When the ceramic body is heated at a temperature (e.g. 200 to 800°C) higher than the burning temperture of the pore forming agent and lower than the sintering temperture during the temperature rise time, the pore forming agent gets burned away to generate a gaseous component by decomposition so that the ceramic body becomes rid of the gaseous component before the extensive sintering. The sintered ceramic component can be thus protected from strength deterioration because of the occurrence of very few internal pores (voids) with a relatively large diameter.

The ceramic component can be produced by forming press through the use of a press die having a pressure application surface provided with a plurality of protrusions corresponding to the surface pores, or by cutting, in place of using the pore forming agent.

With the above-mentioned structure, the ceramic component becomes able to maintain excellent sliding and sealing characteristics, without characteristics deterioration, over a long time or over a number of uses and, when used in a sliding mechanism, achieve sufficiently high durability to meet the recent demand for the long-life operation of the sliding mechanism.

The sintered ceramic component may be directly used as the sliding member or may be subjected to cutting and/or grinding before used as the sliding member.

The thus-obtained ceramic sliding member is suitable for use in any type of sliding mechanism. In the present embodiment, the sliding mechanism has two or more sliding members slidable relative each other, at least one of which is formed of the above-explained ceramic component and the other of which is formed of either the above-explained ceramic component or any other material component such as metal or carbon component The opposing pair of the sliding members may be a fixed member and a movable (slidable) member, respectively, or may be both movable (slidable) members. A lubricant such as silicone grease can be applied to the interface between the sliding members for improvement in sliding characteristics.

The sliding mechanism is applicable to various uses such as a disc valve unit for mixing two or more fluids of the same kind but different temperatures, or of different kinds and a seal ring unit for controlling the leakage of a fluid into or out of a part of a machine.

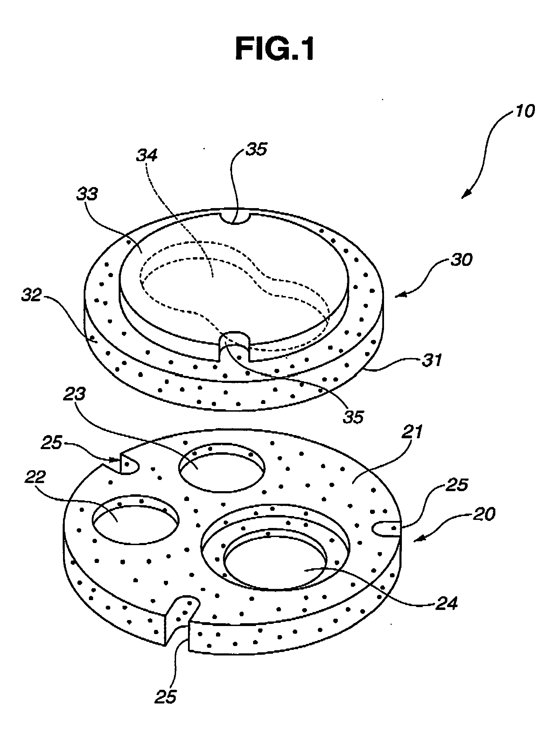

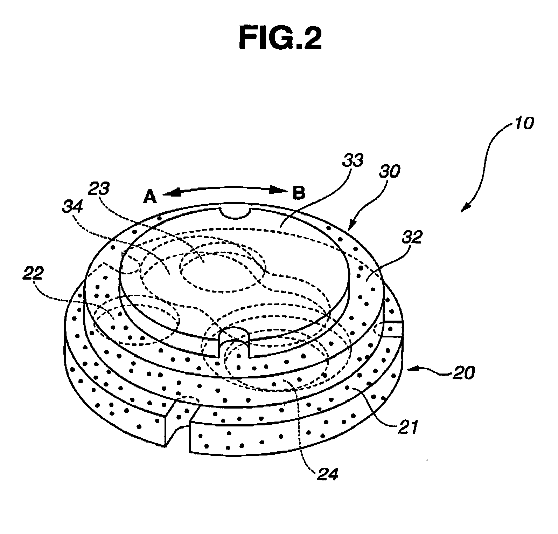

For example, the sliding mechanism can be designed as a mixing disc valve unit 10 to mix high-and low-temperature liquids such as hot water and cold water in a mixing faucet as shown in FIGS. 1 and 2.

The disc valve unit 10 has a pair of sliding members 20 and 30 accommodated in a casing and having respective sliding surfaces 21 and 31 slidable relative to each other with a lubricant being applied to the interface between these sliding surfaces 21 and 31. Although not shown in the drawings, the disc valve unit 10 also has an operation lever and liquid inlet and outlet pipes connected to the casing.

As shown in FIG. 1, the sliding member 20 is formed of the above-explained ceramic component in a disc shape and includes a high-temperature liquid supply hole 22, a low-temperature liquid supply hole 23 and a mixed liquid discharge hole 24 made through the sliding member 20 in a thickness direction thereof and a plurality of fixing portions 25 made in the periphery of the sliding member 20 to fix the sliding member 20 to the casing. The high-temperature liquid supply hole 22 and the low-temperature liquid supply hole 23 allow the high-temperture liquid and the low-temperature liquid to flow therethrough from the bottom surface sides to the sliding surface sides, respectively; whereas the mixed liquid discharge hole 24 allows a mixture of the high-temperture liquid and the low-temperature liquid to flow therethrough from the sliding surface side to the bottom surface side. Herein, the liquid discharge hole 24 consists of two regions: a large-diameter region on the sliding surface side and a small-diameter region on the bottom surface side. Although the liquid supply and discharge holes 22, 23 and 24 are circular in cross section in the present embodiment, the cross sectional shapes of these holes 22, 23 and 24 are not limited to circle. Each of the liquid supply and discharge holes 22, 23 and 24 can alternatively be of semi-circular or distorted oval shape, polygonal shape or any other shape capable of creating a streamline of the liquid. The sizes of the liquid supply and discharge holes 22, 23 and 24 are not also particularly restricted. The shapes and sizes of the liquid supply and discharge holes 22, 23 and 24 can be set appropriately so as to regulate the amount of flow of the mixed fluid.

The sliding member 30 has a disc-shaped base portion 32 and a disc-shaped cap portion 33 as shown in FIG 1. In the present embodiment, the base portion 32 is formed of the above-explained ceramic component. Further, the base portion 32 is made slightly smaller in outer diameter than the sliding member 20 and has a mixing hole 34 made therethrough in a thickness direction of the sliding member 30 such that the mixing hole 34 is in communication with the liquid supply and discharge holes 22, 23 and 24. The cap portion 33 can be formed of the above-explained ceramic component or any other ceramic or metal component etc. The cap portion 33 is made smaller in outer diameter than the base portion 32 and bonded to the base portion 32 such that the mixing hole 34 is entirely covered and closed by the cap portion 33. The shape of the mixing hole 34 is not limited to the gourd-like shape shown in FIG. 1. The mixing hole 34 can alternatively be of polygonal shape, circular shape, pear shape or any other shape capable of creating a streamline of the fluid. The size of the mixing hole 34 is not also particularly restricted. The shape and size of the mixing hole 34 can be set appropriately so as to be in communication with the liquid supply and discharge holes 22, 23 and 24. The sliding member 30 further has engagement portions 35 made in a periphery of the cap portion 33 to engage thereon the valve operation lever.

The disc valve unit 10 operates as follows.

When the sliding member 30 is in a position shown in FIG 2, the low-temperature liquid supply hole 23 and the mixed liquid discharge hole 24 are in communication with the mixing hole 34. In this state, only the low-temperature liquid is supplied to the mixing hole 34 through the low-temperaturc liquid supply hole 23 and then discharged from the liquid discharge hole 24.

When the operation lever is moved by a given amount in the direction of arrow A in FIG. 2, the sliding member 30 slides relative to the sliding member 20 in the direction of arrow A so that the high-temperature liquid supply hole 22, the low-temperature liquid supply hole 23 and the mixed liquid discharge hole 24 are in communication with the mixing hole 34. Both of the high-temperature liquid and the low-temperature liquid are supplied to the mixing hole 34 through the high-temperature liquid supply hole 22 and the low-temperature liquid supply hole 23 and mixed together within the mixing hole 34. The resultant mixed fluid is then discharged from the liquid discharge hole 24.

By movement of the operation lever, the volumes of the high- and low-temperature liquids supplied to the mixing hole 34 are changed depending on the angle of rotation of the sliding member 30 relative to the sliding member 20, i.e., the areas of communication between the mixing hole 34 and the high- and low-temperature liquid supply holes 22 and 23. The temperature of the mixed liquid thus increases with increase in the angle of rotation of the sliding member 30 in the direction of arrow A and decreases with increase in the angle of rotation of the sliding member in the direction of arrow B. In this way, the temperature of the mixed liquid can be controlled to a desired level by adjusting the amount of movement of the valve operation lever, i.e., the angle of rotation of the sliding member 30 relative to the sliding member 20.

The above-structured disc valve unit 10 becomes able to maintain excellent durability and sliding and sealing characteristics, without characteristics deterioration, over a long time or over a number of uses, since each of the sliding members 20 and 30 is formed of the ceramic component according to the present embodiment.

Although the mixed liquid discharge hole 24 is formed in the sliding member 20, the liquid discharge hole 24 may alternatively be formed in the sliding member 30 (notably, the cap portion 33 of the sliding member 30).

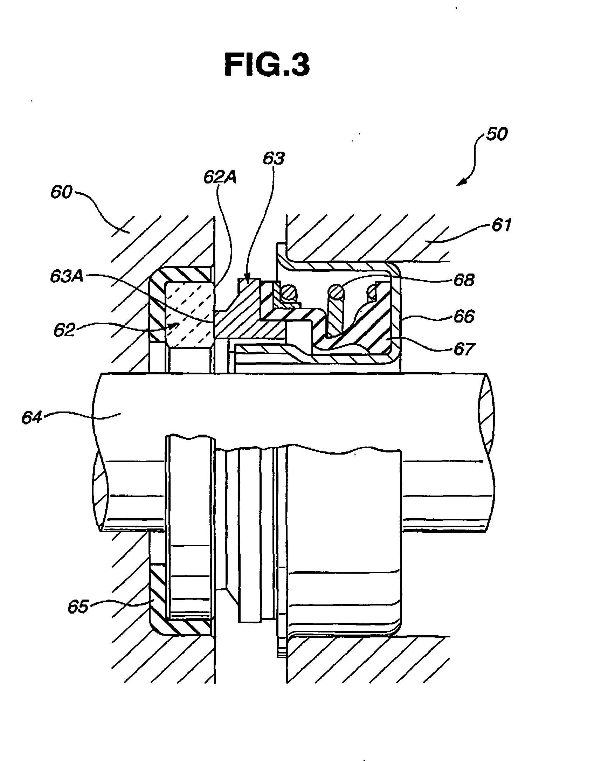

Further, the sliding mechanism can be designed as a mechanical seal unit 50 to provide a seal on a rotation shaft 64 of a pump e.g. an automotive water pump as shown in FIG 3. Although not shown in the drawing, an impeller is connected with one end of the rotation shaft 64 in the present embodiment.

The mechanical seal unit 50 has a pair of sliding members: a mating ring 62 fitted in a rotatable housing 60 of the pump (which is mounted on the pump impeller), with a cup gasket 65 held between the mating ring 62 and the housing 60, and a seal ring 63 fitted in a fixed housing 61 of the pump and biasing means such as a rubber bellows 67 and a coil spring 68 built in a cartridge or casing 66 to bias the seal ring 63 toward the mating ring 62 so that the mating ring 62 and the seal ring 63 have respective sliding surfaces 62A and 63A in sliding contact with each other. In the present embodiment, the mating ring 62 is formed of the above-explained ceramic component. The seal ring 63 is formed of a carbon or metal component. The mating ring 62 can be formed into a desired shape, size and thickness according to the rotation shaft 64 of the pump sealed by the mechanical seal unit 50.

The above-structured mechanical seal unit 50 becomes able to maintain excellent durability sliding and sealing characteristics, without characteristics deterioration, over a long time or over a number of uses, since the mating ring 62 is made of the ceramic component according to the present embodiment.

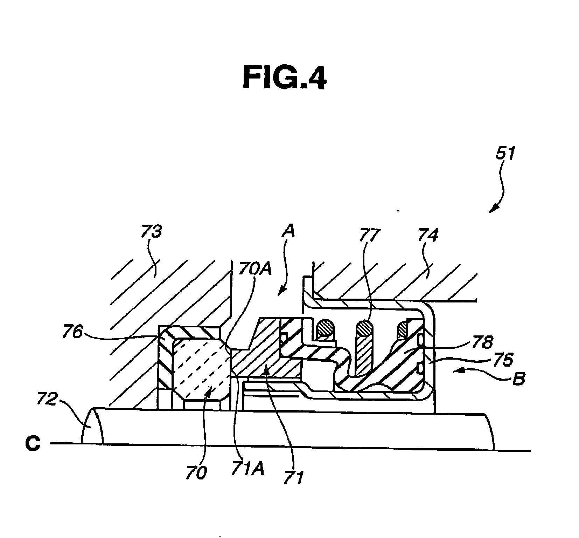

The sliding mechanism may be designed as another mechanical seal unit 51 to provide a seal on a rotation shaft 72 of a pump in order to prevent the leakage of a liquid A (water in the pump) into an atmospheric side B (motor side or outside of the pump) as shown in FIG. 4. As the mechanical seal unit 51 is symmetrical with respect to the axis C of the pump shaft 72, only substantially half of the mechanical seal unit 51 on one side of the shaft axis C is herein indicated in FIG. 4 for simplification purposes. The pump includes an impeller 73 mounted on one end of the pump shaft 72 and a housing 74 with a U-shaped cross section metal casing 75

The mechanical seal unit 51 has a pair of sliding members 70 and 71: a rotatable ring 70 fitted in an impeller 73 of the pump (which is mounted on one end of the pump shaft 72) in such a manner that the rotatable ring 70 can rotate together with the impeller 73, with an elastic gasket 76 held between the ring 70 and the impeller 73, and a fixed ring 71 fitted onto a U-shaped cross section metal casing 75 of the pump housing 74 in such a manner that the fixed ring 71 can move along the direction of the pump rotation shaft 72 but cannot rotate around the pump rotation shaft 72. The seal unit 51 also has biasing means such as a spring 77 disposed in the metal casing 75 to bias the fixed ring 71 toward the rotatable ring 70 so that the rotatable ring 70 and the fixed ring 71 have respective sliding surfaces 70A and 7IA in sliding contact with each other. The space between the fixed ring 71 and the metal casing 75 is sealed with a rubber bellows 78. In the present embodiment, the rotatable ring 70 is formed of the above-explained ceramic component. The fixed ring 71 is formed of a carbon or metal component. The rotatable ring 70 can be formed into a desired shape, size and thickness according to the rotation shaft 72 of the pump sealed by the mechanical seal unit 51.

The above-structured mechanical seal unit 51 becomes able to maintain excellent durability sliding and sealing characteristics, without characteristics deterioration, over a long time or over a number of uses, since the rotation ring 70 is formed of the ceramic component according to the present embodiment.

The present invention will be described in more detail with reference to the following examples. It should be however noted that the following examples are only illustrative and not intended to limit the invention thereto.

### Experiment 1

In each example, samples of ceramic components and sliding members were produced and evaluated by the following procedure.

### Sample Preparations

An alumina powder containing therein an effective amount of sintering aid (magnesium oxide, silicon oxide and calcium oxide) and an artificial graphite powder were mixed together uniformly to prepare a powder mixture. Herein, the graphite powder was in spherical particle form with an average particle size of 40 to 750 µm. The amount of the graphite powder was varied within the range of 0.1 to 20% by mass based on the total amount of the powder mixture, and the amount of the alumina powder was adjusted appropriately depending on the amount of the graphite powder.

The resultant powder mixture was molded into first and second sliding test pieces by die press with 1000 kg/cm² of pressure. Each of the first sliding test pieces was disc-shaped as in the case of the sliding member 20 shown in FIG. 1 with an outer diameter of 37 mm and a thickness of 8 mm but had three elongated, distorted through-holes (hole size: 9 mm × 4 mm, 9 mm × 4 mm, 8 mm × 11 mm). Each of the second sliding test pieces was also disc-shaped as in the case of the sliding member 30 shown in FIG. 1 with an outer diameter of 32 mm and a thickness of 7 mm but had an elongated, distorted hole (hole size: 20 mm × 15 mm).

The test pieces were sintered in the air at 1600°C for 2 hours by means of an electric furnace. The time of temperature rise from an ambient temperature to 1600°C was 750 minutes.

The thus-obtained ceramic test pieces were processed by a grinder using free abrasive particles and completed with grounded sliding surfaces.

### Evaluations

The average surface pore opening diameter, sliding area rate and sliding surface roughness of the test pieces were measured according to the above-described methods. Further, the average diameter of inevitably generated fine pores (of smaller than 40 µm in diameter) of the test pieces was determined to be about 5 µm when measured in the same way as the average surface pore opening diameter of the test pieces.

Each pair of the first and second test pieces was set in a mixing faucet durability tester to evaluate the sliding and sealing characteristics and durability of the test pieces. The evaluation tests were conducted under the conditions of a test-piece tightening pressure of 980 N·cm, a water pressure of 1.5 kp/cm² and a water temperature of 80°C.

The sliding characteristics of the test pieces were rated, in terms of the initial sliding torque as measured at a distance of 10 cm from a handle fulcrum point of the tester, as "O" when the initial sliding torque was smaller than or equal to 78.4 N·cm and "△" when the initial sliding torque was larger than 78.4 N·cm.

The sealing characteristics of the test pieces were rated, by visually checking the occurrence of water leakage while repeatedly sliding the first and second test pieces relative to each other in opposite directions by a distance of 20 mm (i.e. by a rotation angle of 70°) at a speed of 30 mm/sec, as "○" when no water leakage was detected after 100,000 times of sliding rotations; "△" when water leakage was not detected in the early stage of installation of the test pieces but detected before 100,000 times of sliding rotations; "×" when water leakage was detected in the early stage of installation of the test pieces.

The durability of the ceramic discs was rated, by repeatedly sliding the test pieces relative to each other in opposite directions by a distance of 20 mm (i.e. by a rotation angle of 70°) at a speed of 30 mm/sec and counting the number of sliding rotations at the time the sliding torque (as measured at a distance of 10 cm from the handle fulcrum point of the tester) exceeded 78.4 N·cm, as "○" when the sliding rotation number was greater than 100,000 times; "△" when the sliding rotation number was greater than 10,000 times and smaller than or equal to 100,000 times ; and " × " when the sliding rotation number was smaller than or equal to 10,000 times.

The comprehensive evaluation was given in four ranks: "⊚" (very good) when all of the sliding characteristics, sealing characteristics and durability were rated as "○"; "○" (good) when one of the sliding characteristics, sealing characteristics and durability was rated as "△" and the other two were rated as "○"; "△" (satisfactory) when two of the sliding characteristics, sealing characteristics and durability were rated as "△" and the other one was rated as "○"; and " × " (bad) when at least either one of the sealing characteristics and durability was rated as "X".

The measurement and evaluation results are indicated in TABLE.

**TABLE**

| | Average pore opening diameter (µm) | Sliding area rate (%) | Surface roughness (µm) | Sliding characteristics | Sealing characteristics | Durability | Comprehensive Evaluation |
|---|---|---|---|---|---|---|---|
| Comparative Example 1 | 35.3 | 19.4 | 0.10 | △ | × | × | × |
| Comparative Example 2 | 35.3 | 44.6 | 0.10 | △ | ○ | × | × |
| Comparative Example 3 | 48.5 | 75.1 | 0.25 | △ | ○ | × | × |
| Comparative Example 4 | 48.5 | 85.1 | 0.25 | △ | ○ | × | × |
| Comparative Example 5 | 50.1 | 10.2 | 0.25 | △ | × | ○ | × |
| Example 1 | 50.1 | 44.6 | 0.25 | △ | ○ | ○ | ○ |
| Example 2 | 59.4 | 40.1 | 0.10 | △ | ○ | ○ | ○ |
| Comparative Example 6 | 59.4 | 86.5 | 0.25 | △ | ○ | × | × |
| Example 3 | 60.2 | 74.2 | 0.10 | ○ | ○ | ○ | ⊚ |
| Comparative Example 7 | 80.2 | 19.4 | 0.10 | ○ | × | ○ | × |
| Example 4 | 80.2 | 39.2 | 0.25 | ○ | △ | ○ | ○ |
| Example 5 | 80.2 | 74.2 | 0.25 | ○ | ○ | ○ | ⊚ |
| Example 6 | 80.2 | 75.1 | 0.25 | ○ | ○ | △ | ○ |
| Example 7 | 82.3 | 44.6 | 0.10 | ○ | ○ | ○ | ⊚ |
| Example 8 | 89.2 | 44.6 | 0.10 | ○ | ○ | ○ | ⊚ |
| Comparative Example 8 | 100.1 | 19.4 | 0.25 | ○ | × | ○ | × |
| Example 9 | 100.1 | 21.5 | 0.25 | ○ | △ | ○ | ○ |
| Example 10 | 100.1 | 44.6 | 0.25 | ○ | ○ | ○ | ⊚ |
| Example 11 | 100.1 | 75.1 | 0.25 | ○ | ○ | △ | ○ |
| Comparative Example 9 | 100.1 | 86.5 | 0.25 | △ | ○ | × | × |
| Example 12 | 109.8 | 39.2 | 0.10 | ○ | △ | ○ | ○ |
| Example 13 | 109.8 | 74.2 | 0.10 | ○ | ○ | ○ | ⊚ |
| Example 14 | 109.8 | 75.1 | 0.10 | ○ | ○ | △ | ○ |
| Example 15 | 110.6 | 44.6 | 0.25 | ○ | ○ | ○ | ⊚ |
| Comparative Example 10 | 119.2 | 10.2 | 0.10 | ○ | × | ○ | × |
| Example 16 | 119.2 | 40.1 | 0.10 | ○ | ○ | ○ | ⊚ |
| Comparative Example 11 | 119.2 | 85.1 | 0.10 | △ | ○ | × | × |
| Example 17 | 120.1 | 44.6 | 0.25 | ○ | △ | ○ | ○ |
| Example 18 | 149.1 | 21.5 | 0.25 | ○ | △ | ○ | ○ |
| Example 19 | 149.1 | 44.6 | 0.25 | ○ | △ | ○ | ○ |
| Example 20 | 149.1 | 75.1 | 0.25 | ○ | △ | △ | △ |
| Example 21 | 150.1 | 44.6 | 0.25 | ○ | △ | ○ | ○ |
| Comparative Example 12 | 151.1 | 10.2 | 0.10 | ○ | × | ○ | × |
| Example 22 | 175.1 | 44.6 | 0.10 | ○ | △ | ○ | ○ |
| Comparative Example 13 | 175.1 | 90.2 | 0.10 | △ | △ | × | × |
| Example 23 | 250.1 | 39.2 | 0.25 | ○ | △ | ○ | ○ |
| Example 24 | 250.1 | 74.2 | 0.25 | ○ | △ | ○ | ○ |
| Example 25 | 250.1 | 84.3 | 0.25 | ○ | △ | △ | △ |
| Example 26 | 350.1 | 44.6 | 0.25 | ○ | △ | ○ | ○ |
| Comparative Example 14 | 490.1 | 10.2 | 0.10 | ○ | × | ○ | × |
| Example 27 | 490.1 | 21.5 | 0.10 | ○ | △ | ○ | ○ |
| Example 28 | 490.1 | 44.6 | 0.10 | ○ | △ | ○ | ○ |
| Example 29 | 490.1 | 75.1 | 0.10 | ○ | △ | △ | △ |
| Comparative Example 15 | 490.1 | 90.2 | 0.10 | △ | △ | × | × |
| Comparative Example 16 | 510.1 | 19.4 | 0.10 | ○ | × | ○ | × |
| Comparative Example 17 | 510.1 | 75.1 | 0.10 | ○ | × | △ | × |
| Comparative Example 18 | 510.1 | 85.1 | 0.10 | △ | × | × | × |

As is apparent from TABLE, the samples of Examples 1-29 were able to show high durability and maintain excellent sliding and sealing characteristics over a long time or a number of uses so as to meet the recent demand for the long-life operations of the sliding mechanisms.

### Experiment 2

In Experiment 2, samples of sliding members 62, 63 and sliding members 70, 71 for mechanical seal units 50 and 51 were produced and evaluated in the same as in Experiment 1. The evaluation results of Experiment 2 were the same as those of Experiment 1.

### Experiment 3

Samples of disc valve sliding members 20, 30 and mechanical seal sliding members 62, 63 and sliding members 70, 71 were produced and evaluated in the same way as in Experiments 1 and 2 except that either a silicon nitride powder or a mixture of alumina powder and silicon nitride powder was used in place of the alumina powder. The evaluation results of Experiment 3 were the same as those of Experiments 1 and 2.

As described above, it is possible in the present invention to allow the ceramic component to achieve high durability and excellent sliding and sealing characteristics for suitable use as the sliding member by providing the ceramic component with an average surface pore opening diameter of 50 to 500 µm and a sliding area rate of 20 to 85%.

The entire contents of Japanese Patent Application No. 2005-283852 (filed on September 29, 2005) are herein incorporated by reference.

Although the present invention has been described with reference to the above specific embodiments of the invention, the invention is not limited to the these exemplary embodiments. Various modification and variation of the embodiments described above will occur to those skilled in the art in light of the above teaching. The scope of the invention is defined with reference to the following claims.

## Claims

1. A ceramic component having surface formed with a plurality of open pores, **characterized in that** an average opening diameter of said pores is 50 to 500 µm and a sliding area rate of said surface is 20 to 85%.

2. The ceramic component according to claim 1, **characterized in** the sliding area rate of said surface is 40 to 75%.

3. The ceramic component according to claim 1 or 2, **characterized in that** the average opening diameter of said pores is 60 to 120 µm.

4. The ceramic component according to any one of claims 1 to 3, **characterized in that** the ceramic component is a sintered body of either alumina, silicon nitride or a mixture thereof.

5. The ceramic component according to any one of claims 1 to 4, **characterized in that** said pores are distributed over the surface of the ceramic component.

6. The ceramic component according to any one of claims 1 to 5, further comprising a plurality of pores in an interior of the ceramic component.

7. A method of producing the ceramic component according to any one of claims 1 to 6, comprising:
preparing a mixture of a ceramic powder and a pore forming agent;
molding the mixture to obtain a molded body; and
sintering the molded body at a temperature higher than a burning temperature of the pore forming agent.

8. A sliding member (20, 30, 62, 70) formed of the ceramic component according to any one of claims 1 to 6.

9. A sliding mechanism (10; 50; 51) comprising a pair of first and second sliding members (20, 30; 62, 63; 70, 71) slidable relative each other, **characterized in that** at least one of the first and second sliding members (20, 30; 62, 63; 70, 71) is formed of the ceramic component according to any one of claims 1 to 6.

10. The sliding mechanism (10; 50; 51) according to claim 9, **characterized in that** the sliding mechanism is designed as either a disc valve unit (10) or a seal ring unit (50; 51).
